# EUROPEAN PATENT SPECIFICATION

(11) **EP 1 783 163 B1**
(45) Date of publication and mention of the grant of the patent: **06.08.2008**
(21) Application number: 06022124.9
(22) Date of filing: 23.10.2006
(51) Int. Cl.: C08K 5/00

(54) **Method to produce reinforced halobutyl elastomer compounds**
Verfahren zur Herstellung von verstärkten Halobutylelastomeren
Procédé pour fabriquer des compositions à base d'élastomère halobutyle renforce

(30) Priority: 04.11.2005 US 733412 P
(43) Date of publication of application: 09.05.2007
(73) Proprietor: Lanxess Inc., Sarnia, Ontario N7T 7M2 (CA)
(72) Inventor: Kulbaba, Kevin, Sarnia Ontario N7S4H7 (CA); Resendes, Rui, Corunna Ontario N0N 1G0 (CA)
(74) Representative: Zobel, Manfred

(56) References cited:
- EP-A1- 1 329 479
- EP-A2- 1 236 766
- WO-A-20/05056664

## Description

### FIELD OF THE INVENTION

The present invention relates to halobutyl elastomer compounds containing a butyl elastomer, at least one additional elastomer, a mineral filler and a mixed modifier system of a silane compound and an additive derived from a compound containing at least one hydroxyl group and a functional group containing a basic amine.

The present invention also relates to a process of preparing a reinforced elastomer including admixing a halobutyl elastomer, at least one additional elastomer, a mineral filler and a mixed modifier system of a silane compound and an additive derived from a compound containing at least one hydroxyl group and a functional group containing a basic amine.

### BACKGROUND OF THE INVENTION

Butyl rubber (IIR), a random copolymer of isobutylene and isoprene is well known for its excellent thermal stability, ozone resistance and desirable dampening characteristics. IIR is prepared commercially in a slurry process using methyl chloride as a vehicle and a Friedel-Crafts catalyst as the polymerization initiator. The methyl chloride offers the advantage that AlCl₃, a relatively inexpensive Friedel-Crafts catalyst, is soluble in it, as are the isobutylene and isoprene comonomers. Additionally, the butyl rubber polymer is insoluble in the methyl chloride and precipitates out of solution as fine particles. The polymerization is generally carried out at temperatures of about -90°C to -100°C. See U.S. Patent No. 2,356,128 and Ullmanns Encyclopedia of Industrial Chemistry, volume A 23, 1993, pages 288-295. The low polymerization temperatures are required in order to achieve molecular weights which are sufficiently high for rubber applications.

The first major application of IIR was in tire inner tubes. Despite the low levels of backbone unsaturation (ca. 0.8 - 1.8 mol %), IIR possesses sufficient vulcanization activity for inner tube application. With the evolution of the tire inner liner, it became necessary to enhance the cure reactivity of IIR to levels typically found for conventional diene-based elastomers such as butadiene rubber (BR) or styrene-butadiene rubber (SBR). To this end, halogenated grades of butyl rubber were developed. The treatment of organic IIR solutions with elemental chlorine or bromine results in the isolation of halobutyl rubber (HIIR), such as chlorobutyl (CIIR) and bromobutyl (BIIR) rubber. These materials are marked by the presence of reactive allylic halides along the polymer main chain that permit co-vulcanization with other rubber compounds.

As automotive greenhouse gas emissions have come under increasing scrutiny, there has been a movement in the industry to reduce the weight and improve rolling resistance of tires. Since the tread is vulcanized to the tire carcass, a halobutyl rubber compound is preferred over nonhalogenated Butyls for its cure reactivity. Halobutyl rubber compounds used in tire treads desirably exhibit low rolling resistance and high abrasion resistance. Although it is possible to provide both of these in a hard rubber compound, this has a negative impact on traction. The preferred butyl-rubber containing compound for use in tires therefore exhibits a combination of dynamic properties including low rolling resistance, abrasion resistance at least equivalent to existing tread compounds, and wet traction characteristics. However, obtaining the desired properties has proven difficult in practice and no commercial halobutyl tread compounds currently exist.

It is known in the art that BIIR-based tread formulations prepared with the use of additives such as DMAE possess certain enhanced dynamic properties. Resendes, R; Hopkins, W; Niziolek, T; Braubach, W "Cost Effective Modifiers for the Preparation of BIIR Based Tire Tread Formulations." Rubber World, September, 2003, pp. 46-51*.* However, the use of silanes in conjunction with DMAE has been left largely unexplored and it is unclear whether or not a synergistic effect might exist that could provide the combination of dynamic properties desirable in tread formulations.

### SUMMARY OF THE INVENTION

The present invention relates to filled halobutyl elastomers, such as bromobutyl elastomers (BllR). Surprisingly it has been discovered that a synergistic effect occurs in halobutyl elastomer compounds when a mixed modifier is utilized during compounding which results in a compound having unexpected superior properties.

The present invention relates to halobutyl elastomer compounds containing a butyl elastomer, at least one additional elastomer, a mineral filler and a mixed modifier system of a silane compound and an additive derived from a compound containing at least one hydroxyl group and a functional group containing a basic amine.

The present invention also relates to a process of preparing a reinforced elastomer including admixing a halobutyl elastomer, at least one additional elastomer, a mineral filler and a mixed modifier system of a silane compound and an additive derived from a compound containing at least one hydroxyl group and a functional group containing a basic amine.

### BRIEF DESCRIPTION OF THE INVENTION

Figure 1 illustrates the tan δ response versus temperature of filled butyl elastomer compounds.
Figure 2 illustrates the tan δ response versus temperature of filled butyl elastomer compounds.

### DETAILED DESCRIPTION OF THE INVENTION

The phrase "halobutyl elastomer(s)" as used herein refers to a chlorinated or brominated butyl elastomer. Brominated butyl elastomers are preferred, and the present invention is illustrated, by way of example, with reference to bromobutyl elastomers. It should be understood, however, that the present invention extends to the use of chlorinated butyl elastomers.

Halobutyl elastomers suitable for use in the present invention include, but are not limited to, brominated butyl elastomers. Such elastomers may be obtained by bromination of butyl rubber, which is a copolymer of an isoolefin, usually isobutylene and a co-monomer that is usually a C4 to C6 conjugated diolefin, preferably isoprene and brominated isobutene-isoprene-copolymers (BIIR). Co-monomers other than conjugated diolefins can be used, such as alkyl-substituted vinyl aromatic co-monomers which includes C1-C4-alkyl substituted styrene. An example of a halobutyl elastomer which is commercially available is brominated isobutylene methylstyrene copolymer (BIMS) in which the co-monomer is p-methylstyrene.

Brominated butyl elastomers typically contain in the range of from 0.1 to 10 weight percent, preferably 0.5 to 5 weight percent of repeating units derived from diolefin, preferably isoprene, and in the range of from 90 to 99.9 weight percent, preferably 95 to 99.5 weight percent of repeating units derived from isoolefin, preferably isobutylene, based upon the hydrocarbon content of the polymer, and in the range of from 0.1 to 9 weight percent, preferably 0.75 to 2.3 weight percent and more preferably from 0.75 to 2.3 weight percent bromine, based upon the bromobutyl polymer. A typical bromobutyl polymer has a molecular weight, expressed as the Mooney viscosity according to DIN 53 523 (ML 1 + 8 at 125°C), in the range of from 25 to 60.

A stabilizer may be added to the brominated butyl elastomer. Suitable stabilizers include calcium stearate and epoxidized soy bean oil, preferably used in an amount in the range of from 0.5 to 5 parts by weight per 100 parts by weight of the brominated butyl rubber (phr).

Examples of suitable brominated butyl elastomers include Bayer Bromobutyl 2030, Bayer Bromobutyl 2040 (BB2040), and Bayer Bromobutyl X2 commercially available from Bayer Corporation. Bayer BB2040 has a Mooney viscosity (ML 1+8 @ 125°C) of 39 ± 4, a bromine content of 2.0 ± 0.3 wt% and an approximate molecular weight of 500,000 grams per mole.

The brominated butyl elastomer used in the process of the present invention may also be a graft copolymer of a brominated butyl rubber and a polymer based upon a conjugated diolefin monomer. Co-pending Canadian Patent Application 2,279,085 is directed towards a process for preparing such graft copolymers by mixing solid brominated butyl rubber with a solid polymer based on a conjugated diolefin monomer which also includes some C-S-(S)n-C bonds, where n is an integer from 1 to 7, the mixing being carried out at a temperature greater than 50°C and for a time sufficient to cause grafting. The bromobutyl elastomer of the graft copolymer can be any of those described above. The conjugated diolefins that can be incorporated in the graft copolymer generally have the structural formula: 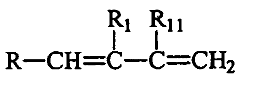 wherein R is a hydrogen atom or an alkyl group containing from 1 to 8 carbon atoms and wherein R1 and R11 can be the same or different and are selected from hydrogen atoms or alkyl groups containing from 1 to 4 carbon atoms. Suitable conjugated diolefins include 1,3-butadiene, isoprene, 2-methyl-1,3-pentadiene, 4-butyl-1,3-pentadiene, 2,3-dimethyl-1,3-pentadiene 1,3-hexadiene, 1,3-octadiene, 2,3-dibutyl-1,3-pentadiene, 2-ethyl-1,3-pentadiene, 2-ethyl-1,3-butadiene and the like. Conjugated diolefin monomers containing from 4 to 8 carbon atoms are preferred, 1,3-butadiene and isoprene being more preferred.

The polymer based on a conjugated diene monomer can be a homopolymer, or a copolymer of two or more conjugated diene monomers, or a copolymer with a vinyl aromatic monomer.

The vinyl aromatic monomers, which can optionally be used, should be copolymerizable with the conjugated diolefin monomers being employed. Generally, any vinyl aromatic monomer, which is known to polymerize with organo alkali metal initiators, can be used. Such vinyl aromatic monomers usually contain in the range of from 8 to 20 carbon atoms, preferably from 8 to 14 carbon atoms. Examples of suitable vinyl aromatic monomers include styrene, alpha-methyl styrene, various alkyl styrenes including p-methylstyrene, p-methoxy styrene, 1-vinylnaphthalene, 2-vinyl naphthalene, 4-vinyl toluene and the like. Styrene is preferred for copolymerization with 1,3-butadiene alone or for terpolymerization with both 1,3-butadiene and isoprene.

According to the present invention, the halobutyl elastomer is used in combination with another elastomer. Suitable elastomers include diene based elastomers such as BR, SBR and NR.

According to the present invention the halobutyl elastomer compound is reinforced with a filler. Suitable fillers according to the present invention are composed of particles of a mineral, suitable fillers include silica, silicates, clay (such as ventonite) gypsum, alumina, titanium dioxide, talc and the like, as well as mixtures thereof.

Further examples of suitable fillers include:
- natural clays, such as montmorillonite and other naturally occurring clays;
- organophilically modified clays such as organophilically modified montmorillonite clays (e.g. Cloisite® Nanoclays available from Southern Clay Products) and other organophilically modified naturally occurring clays;
- highly disperse silicas, prepared e.g. by the precipitation of silicate solutions or the flame hydrolysis of silicon halides, with specific surface areas of 5 to 1000, preferably 20 to 400 m2/g (BET specific surface area), and with primary particle sizes of 10 to 400 nm; the silicas can optionally also be present as mixed oxides with other metal oxides such as Al, Mg, Ca, Ba, Zn, Zr and Ti;
- synthetic silicates, such as aluminum silicate and alkaline earth metal silicate;
- magnesium silicate or calcium silicate, with BET specific surface areas of 20 to 400 m²/g and primary particle diameters of 10 to 400 nm;
- natural silicates, such as kaolin and other naturally occurring silica;
- glass fibers and glass fiber products (matting, extrudates) or glass microspheres;
- metal oxides, such as zinc oxide, calcium oxide, magnesium oxide and aluminum oxide;
- metal carbonates, such as magnesium carbonate, calcium carbonate and zinc carbonate;
- metal hydroxides, e.g. aluminum hydroxide and magnesium hydroxide or combinations thereof.

Because these mineral particles have hydroxyl groups on their surface, rendering them hydrophilic and oleophobic, it is difficult to achieve good interaction between the filler particles and the butyl elastomer. For many purposes, the preferred mineral is silica, especially silica prepared by the carbon dioxide precipitation of sodium silicate.

Dried amorphous silica particles suitable for use as mineral fillers in accordance with the present invention have a mean agglomerate particle size in the range of from 1 to 100 microns, preferably between 10 and 50 microns and more preferably between 10 and 25 microns. It is preferred that less than 10 percent by volume of the agglomerate particles are below 5 microns or over 50 microns in size. A suitable amorphous dried silica has a BET surface area, measured in accordance with DIN (Deutsche Industrie Norm) 66131, of between 50 and 450 square meters per gram and a DBP absorption, as measured in accordance with DIN 53601, of between 150 and 400 grams per 100 grams of silica, and a drying loss, as measured according to DIN ISO 787/11, of from 0 to 10 percent by weight. Suitable silica fillers are commercially available under the trademarks HiSil 210, HiSil 233 and HiSil 243 available from PPG Industries Inc. Also suitable are Vulkasil S and Vulkasil N, commercially available from Bayer AG. Mineral fillers can also be used in combination with known non-mineral fillers, such as
- carbon blacks; suitable carbon blacks are preferably prepared by the lamp black, furnace black or gas black process and have BET specific surface areas of 20 to 200 m2/g, for example, SAF, ISAF, HAF, FEF or GPF carbon blacks;
   or
- rubber gels, preferably those based on polybutadiene, butadiene/styrene copolymers, butadiene/acrylonitrile copolymers and polychloroprene.

Non-mineral fillers are not normally used as filler in the halobutyl elastomer compositions of the present invention, but in some embodiments they may be present in an amount up to 60 phr. It is preferred that the mineral filler should constitute at least 35% by weight of the total amount of filler. If the halobutyl elastomer composition of the present invention is blended with another elastomeric composition, that other composition may contain mineral and/or non-mineral fillers.
The mixed modifier system of the present invention includes a silane compound. The silane compound useful in the mixed modifier of the present invention is preferably a sulfur-containing silane. The silane compound may be a sulfur-containing silane compound. Suitable sulfur-containing silanes include those described in United States patent 4,704,414, in published European patent application 0,670,347 A1 and in published German patent application 4435311 A1, which are all incorporated herein by reference. One suitable compound is a mixture of bis[3-(triethoxysilyl)propyl]-monosulfane, bis[3(triethoxysilyl)propyl] disulfane, bis[3-(triethoxysilyl)propyl]trisulfane and bis[3(triethoxysilyl)propyl]tetrasulfane and higher sulfane homologues available under the trademarks Si-69 (average sulfane 3.5), Silquest^{™} A-1589 (from CK Witco)or Si-75 (from Degussa) (average sulfane 2.0). Another example is bis[2-(triethoxysilyl)ethyl]-tetrasulfane, available under the trade-mark Silquest^{™} RC-2.

Examples of suitable sulfur-containing silanes include compounds of formula

R⁷R⁸R⁹SiR¹⁰

in which at least one of R⁷, R⁸ and R⁹, preferably two of R⁷, R⁸ and R⁹ and most preferably three of R⁷, R⁸ and R⁹, are hydroxyl or hydrolysable groups. The groups R⁷, R⁸ and R⁹ are bound to the silicon atom. The group R⁷ may be hydroxyl or OCₚH₂ₚ+1 where p is from 1 to 10 and the carbon chain may be interrupted by oxygen atoms, to give groups, for example of formula CH₃OCH₂ CH₃OCH₂OCH₂O-, CH₃(OCH₂)₄O-, CH₃OCH₂CH₂O-, C₂H₅OCH₂O-, C₂H₅OCH₂OCH₂O-, or C₂H₅OCH₂CH₂O-. Alternatively, R⁷ may be phenoxy. The group R⁸ may be the same as R⁷. R⁸ may also be a C₁₋₁₀ alkyl group, or a C₂₋₁₀ mono- or diunsaturated alkenyl group. Further, R⁸ may be the same as the group R¹⁰ described below.

R⁹ may be the same as R⁷, but it is preferred that R⁷, R⁸ and R⁹ are not all hydroxyl. R⁹ may also be C₁₋₁₀ alkyl, phenyl, C₂₋₁₀ mono- or diunsaturated alkenyl. Further, R⁹ may be the same as the group R¹⁰ described below.

The group R¹⁰ attached to the silicon atom is such that it may participate in a crosslinking reaction with unsaturated polymers by contributing to the formation of crosslinks or by otherwise participating in crosslinking. R¹⁰ may have the following structure:

-(alk)ₑ(Ar)_{f}Sᵢ(alk)_{g}(Ar)ₕSiR⁷R⁸R⁹

where R⁷, R⁸ and R⁹ are the same as previously defined, alk is a divalent straight hydrocarbon group having between 1 and 6 carbon atoms or a branched hydrocarbon group having between 2 and 6 carbon atoms, Ar is either a phenylene -C₆H₄-, biphenylene -C₆H₄-C₆H₄- or -C₆H₄-OC₆H₄-group and e, f, g and h are either 0, 1 or 2 and i is an integer from 2 to 8 inclusive with the provisos that the sum of e and f is always 1 or greater than 1 and that the sum of g and h is also always 1 or greater than 1. Alternately, R¹⁰ may be represented by the structures (alk)ₑ(Ar)_{f}SH or (alk)ₑ(Ar)_{f}SCN where e and f are as defined previously.

Preferably, R⁷, R⁸ and R⁹ are all either OCH₃, OC₂H₅ or OC₃H₈ groups and most preferably all are OCH₃ or OC₂H₅ groups. In one embodiment, the sulfur-containing silane is bis[3-(trimethoxysilyl)propyl]-tetrasulfane (Si-168).

Non-limiting illustrative examples of other sulfur-containing silanes include the following:
3-octanoylthio-1-propyltriethoxysilane (Silane^{™} NXT)
bis[3-(triethoxysilyl)propyl]disulfane,
bis[2-(trimethoxysilyl)ethyl]tetrasulfane,
bis[2-(triethoxysilyl)ethyl]trisulfane,
bis[3-(trimethoxysilyl)propyl]disulfane,
3-mercaptopropyltrimethoxysilane,
3-mercaptopropylmethyldiethoxysilane, and
3-mercaptoethylpropylethoxymethoxysilane.

Other preferred sulfur-containing silanes include those disclosed in published German patent application 44 35 311 A1, (pages 2 and 3), which discloses oligomers and polymers of sulphur containing organooxysilanes of the general formula: 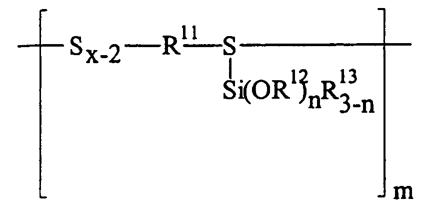 in which R¹¹ is a saturated or unsaturated, branched or unbranched, substituted or unsubstituted hydrocarbon group that is at least trivalent and has from 2 to 20 carbon atoms, provided that there are at least two carbon-sulphur bonds, R¹² and R¹³, independently of each other, are saturated or unsaturated, branched or unbranched, substituted or unsubstituted hydrocarbon groups with 1 to 20 carbon atoms, halogen, hydroxy or hydrogen, n is 1 to 3, m is 1 to 1000, p is 1 to 5, q is 1 to 3 and x is 1 to 8.

Other sulfur-containing silanes are of the general formula 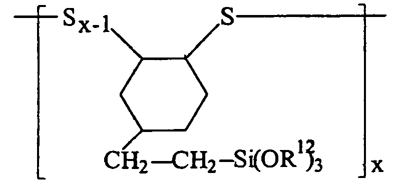 wherein R¹², m and x have the meanings given above, and R¹² is preferably methyl or ethyl. Particularly preferred sulfur-containing silanes are those of the following general formulae:

(RO)₃SiCH₂CH₂CH₂-[Sₓ-CH₂-CH₂]ₙ-Sₓ-CH₂CH₂CH₂Si(OR)₃

in which R = -CH₃ or -C₂H₅, x=1-6 and n=1-10;

(RO)₃SiCH₂CH₂CH₂-[Sₓ-CH₂CH(OH)-CH₂]ₙ-Sₓ-CH₂CH₂CH₂Si(OR)₃

in which R = -CH₃ or -C₂H₅, x = 1-6 and n = 1-10;

(RO)₃SiCH₂CH₂CH₂-[Sₓ-(CH₂)₆]ₙ-Sₓ-CH₂CH₂CH₂-Si(OR)₃

in which R = -CH₃, -C₂H₅ or-C₃H₇, n = 1-10 and x = 1-6;

CH₃-Si(RO)₂-CH₂CH₂CH₂-[(CH₂)₆]ₙ-Sₓ-CH₂CH₂CH₂Si(OR)₂-CH₃

in which R = -CH₃, -C₂H₅ or -C₃H₇, n = 1-10 and x = 1-6;

CH₃-Si(RO)₂-CH₂-[Sₓ-(CH₂)₆]ₙ-Sₓ-CH₂-Si(OR)₂-CH₃

in which R = -CH₃, -C₂H₅ or -C₃H₇, n = 1-10 and x = 1-6;

(RO)₃Si-CH₂CH₂CH₂-[Sₓ-CH₂CH₂OCH₂CH₂)]ₙ-Sₓ-CH₂CH₂CH₂-Si(OR)₃

in which R = -CH₃, -C₂H₅, -C₃H₇, n = 1-10 and x = 1-6; 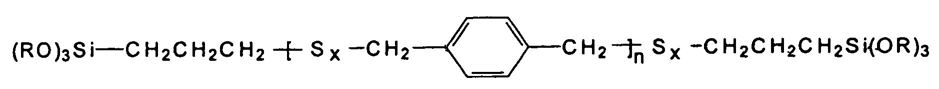 in which R = -CH₃, -C₂H₅, -C₃H₇, n = 1-10 and x = 1-6; 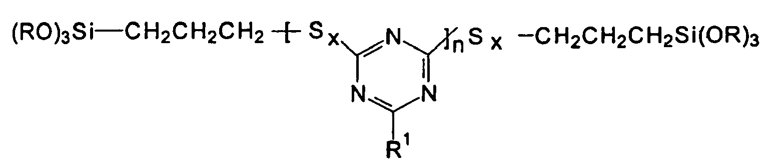 in which R = -CH₃, -C₂H₅ or -C₃H₇; R¹ = -CH₃, -C₂H₅, -C₃H₇, -C₅H₅, -OCH₃, -OC₂H₅, -OC₃H₇ or-OC₅H₅, n = 1-10 and x = 1-8; and

(RO)₃Si-CH₂CH₂CH₂-[Sₓ-(CH₂)₆]ᵣ-[Sₓ-(CH₂)₈]ₚ-CH₂CH₂CH₂-Si(OR)₃

in which R = -CH₃, -C₂H₅ or -C₃H₇, r+p = 2-10 and x = 1-6.
Also mentioned are sulfur-containing silanes of the formulae:

(RO)₃SiCH₂CH₂CH₂-[Sₓ-(CH₂CH₂)₆]ₙ-Sₓ-CH₂CH₂CH₂-Si(OR)₃

(RO)₃SiCH₂CH₂CH₂-[Sₓ-CH₂CH(OH)-CH₂]ₙ-Sₓ-CH₂CH₂CH₂Si(OR)₃

in which x is 1-6 and n is 1-4.

If the silane is a sulfur-containing silane it is preferred that it is bis[3-(triethoxysilyl)propyl]- tetrasulfane, of formula

(C₂H₅O)₃Si-CH₂-CH₂-CH₂-S-S-S-S-CH₂-CH₂-CH₂-Si(OC₂H₅)₃.

This compound is commercially available under the trade-mark Si-69. In fact Si-69 is a mixture of the above compound, i.e., the tetrasulfane, with bis[3-(triethoxy-silyl)-propyl]monosulfane and bis[3-(triethoxysilyl)- propyl]trisulfane, average sulfane 3.5.

Another preferred sulfur-containing silane is available under the trade-mark Silquest^{™} 1589. The material available under this trade-mark is a mixture of sulfanes but the predominant component, about 75%, is similar in structure to the tetrasulfane Si-69, except that it is a disulfane, i.e., it has only

-S-S-

where Si-69 has

-S-S-S-S-.

The remainder of the mixture is composed of -S, to -S₇- compounds. Silquest^{™} A-1589 is available from CK Witco. A similar material is available from Degussa under the trademark Si-75.

Yet another preferred sulfur-containing silane is bis[2-(triethoxysilyl)ethyl]tetrasulfane, available under the trade-mark Silquest^{™} RC-2.

The trimethoxy compounds corresponding to these triethoxy compounds can also be used.

The additive in the mixed modifier system contains at least one hydroxyl group and a functional group containing a basic amine and preferably also contains a primary alcohol group and an amine group separated by methylene bridges, which may be branched. Such compounds have the general formula HO - B - NR₁₄R₁₅; wherein B is a C₁ - C₂₀ alkylene group which may be linear or branched and R₁₄ and R₁₅ are independently H, C₁-C₁₁ alkyl or aryl groups. Preferably the number of methylene groups between the two functional groups should be in the range of from 1 to 4. Examples of preferred additives include monoethanolamine and N,N-dimethylaminoethanol.

The amount of filler to be incorporated into the halobutyl elastomer compound may vary between wide limits. Typical amounts of filler range from 20 parts to 250 parts, preferably 30 parts to 100 parts, more preferably from 40 to 80 parts per hundred parts of elastomer. For a compound containing about 30 phr mineral filler the amount of additive present in the mixed modifier is in the range from about 0.1 to 2.0 phr, more preferably from about 0.3 to 1.7 phr and even more preferably from about 0.5 to 1.5 phr and the amount of the silane compound in the mixed modifier is in the range from about 0.1 to 6.0 phr, more preferably from about 0.8 to 5.0 phr and even more preferably from about 1.6 to 4.2 phr. The amount of modifiers in the mixture will increase directly with the amount of silica in the compound. For example, if the amount of silica in the compound is doubled from 30 phr to 60 phr then the amount of the additive and silane in the mixed modifier may also double. For example, if additional mineral filler is increased, for example, 80 phr then the amount of additive and silane may need to be adjusted to, for example around 2 and 6 phr.

According to the present invention the elastomers, filler(s) and mixed modifier system containing a silane compound and a additive having at least one hydroxyl group and a functional containing a basic amine are mixed together, suitably at a temperature in the range of from 25 to 200°C. Normally the mixing time does not exceed one hour. The mixing can be carried out on a two-role mill mixer, a Banbury mixer or in a miniature internal mixer.

### EXAMPLES

### Testing

Hardness and Stress Strain Properties were determined with the use of an A-2 type durometer following ASTM D-2240 requirements. The stress strain data was generated at 23°C according to the requirements of ASTM D-412 Method A. Die C dumbbells cut from 2mm thick tensile sheets (cured for tc90+5 minutes at 160°C) were used. DIN abrasion resistance was determined according to test method DIN 53516. Sample buttons for DIN abrasion analysis were cured at 160°C for tc90+10 minutes. GABO samples were cured at 160°C for t90 + 5 minutes, and the dynamic response measured from -100°C to +100°C using a frequency of 10Hz and a dynamic strain of 0.1%.Mooney scorch was measured at 130°C with the use of an Alpha Technologies MV 2000 according to ASTM 1646. The tc90 times were determined according to ASTM D-5289 with the use of a Moving Die Rheometer (MDR 2000E) using a frequency of oscillation of 1.7 Hz and a 1° arc at 170°C for 30 minutes total run time. Curing was achieved with the use of an Electric Press equipped with an Allan-Bradley Programmable Controller.

Compounds were prepared using standard mixing practices. The examples were prepared, according to the formulations given in Table 1, with the use of a 1.5 L BR-82 Banbury internal mixer equipped with intermeshing rotors. The temperature was first allowed to stabilize at 30°C. With the rotor speed set at 77 rpm, ingredients **1A** were introduced into the mixer followed by **1B** after 0.5 min. After 3 minutes, ingredients **1C** were added to the mixer. After 4 minutes, a sweep was performed. After 4.5 minutes, ingredients **1D** were added to the mixer followed by a final sweep at 6.0 minutes. The compound was dumped after a total mix time of 7.0 minutes. The curatives (**2A**) were then added on a RT, two-roll mill.

### Examples 1-4 (Mixture of DMEA with Si-69):

**Table 1: Formulations of Compounds 1-7.**

| | Tag | Ingredients (phr) | | | | | | |
|---|---|---|---|---|---|---|---|---|
| | | Comp. Ex.1 | Comp. Ex.2 | Ex.3 | Ex.4 | Ex.5 | Ex.6 | Ex. 7 |
| BUNA^{™} CB 25 | 1A | 50 | 50 | 50 | 50 | 50 | 50 | 50 |
| LANXESS^{®} BROMOBUTYL 2030 | 1A | 50 | 50 | 50 | 50 | 50 | 50 | 50 |
| SILANE SI-69^{®} | 1A | 0 | 0 | 0.8 | 2.4 | 3.2 | 2.4 | 3.2 |
| HI-SIL™ 233 | 1B | 30 | 30 | 30 | 30 | 30 | 30 | 30 |
| N,N-DIMETHYL ETHANOLAMINE | 1B | 1.4 | 1.4 | 1.4 | 1.4 | 1.4 | 0.7 | 0.7 |
| Hexamethyldisilazane | 1B | 0 | 0.73 | 0 | 0 | 0 | 0 | 0 |
| CARBON BLACK, N 234 VULCAN 7 | 1C | 30 | 30 | 30 | 30 | 30 | 30 | 30 |
| STEARIC ACID | 1C | 1 | 1 | 1 | 1 | 1 | 1 | 1 |
| CALSOL 8240 | 1D | 7.5 | 7.5 | 7.5 | 7.5 | 7.5 | 7.5 | 7.5 |
| SUNOLITE 160 PRILLS | 1D | 0.75 | 0.75 | 0.75 | 0.75 | 0.75 | 0.75 | 0.75 |
| VULKANOX^{™} 4020 LG (6PPD) | 1D | 0.5 | 0.5 | 0.5 | 0.5 | 0.5 | 0.5 | 0.5 |
| VULKANOX^{™} HS/LG (B)(R-463) | 1D | 0.5 | 0.5 | 0.5 | 0.5 | 0.5 | 0.5 | 0.5 |
| SULFUR NBS | 2A | 1 | 1 | 1 | 1 | 1 | 1 | 1 |
| VULKACIT CZ/EGC | 2A | 1 | 1 | 1 | 1 | 1 | 1 | 1 |
| ZINC OXIDE | 2A | 2 | 2 | 2 | 2 | 2 | 2 | 2 |

**Table 2: Selected Physical and Dynamic Properties of Compounds 1-7**

| | Ex.1 | Ex.2 | Ex.3 | Ex.4 | Ex. 5 | Ex.6 | Ex. 7 |
|---|---|---|---|---|---|---|---|
| Hardness Shore A (pts) | 61 | 52 | 61 | 61 | 62 | 61 | 62 |
| Modulus 300% | 8.3 | 6.7 | 11.0 | 12.5 | 14.6 | 13.0 | 14.9 |
| Ultimate Tensile | 16.7 | 15.5 | 16.2 | 18.0 | 17.3 | 16.5 | 16.0 |
| M300/M100 | 3.3 | 3.8 | 3.4 | 3.8 | 3.7 | 3.8 | 3.4 |
| DIN Abrasion (mm³) | 75 | 85 | 69 | 67 | 65 | 61 | 65 |
| Scorch Time, t3 | 12.1 | 14.1 | 11.4 | 9.7 | 11.7 | 11.4 | 10.9 |
| Tan delta - 20°C | 0.463 | 0.580 | 0.485 | 0.538 | 0.564 | 0.564 | 0.549 |
| Tan delta 0°C | 0.259 | 0.350 | 0.272 | 0.301 | 0.325 | 0.309 | 0.308 |
| Tan delta +60°C | 0.132 | 0.152 | 0.126 | 0.105 | 0.101 | 0.107 | 0.102 |

Examples 1 and 2 are comparative compounds. Example 1 utilizes only DMAE as a silica modifier for BllR tread compounds while example 2 uses both DMAE and HMDZ modifiers, which serve to both improve filler dispersion and the level of reinforcement. Examples 3-7 use a combination of DMAE and Si-69 to obtain improved compound properties.

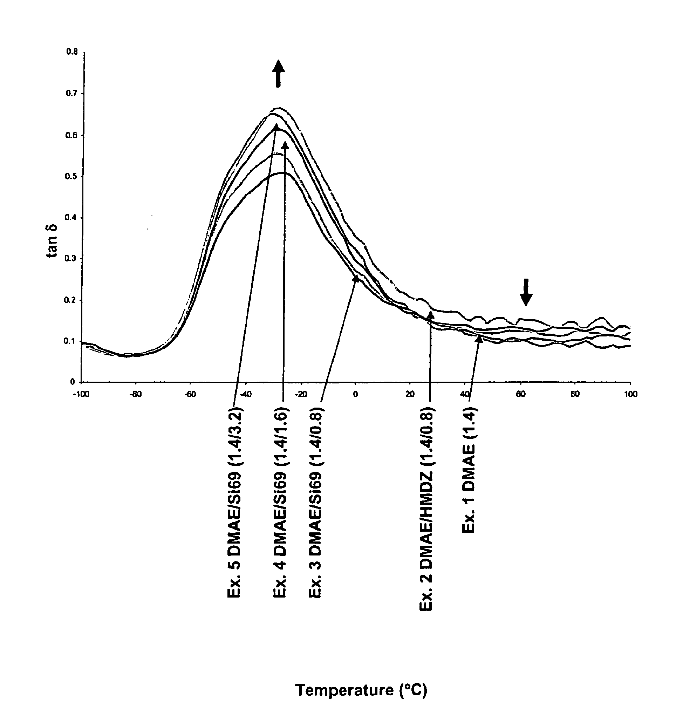

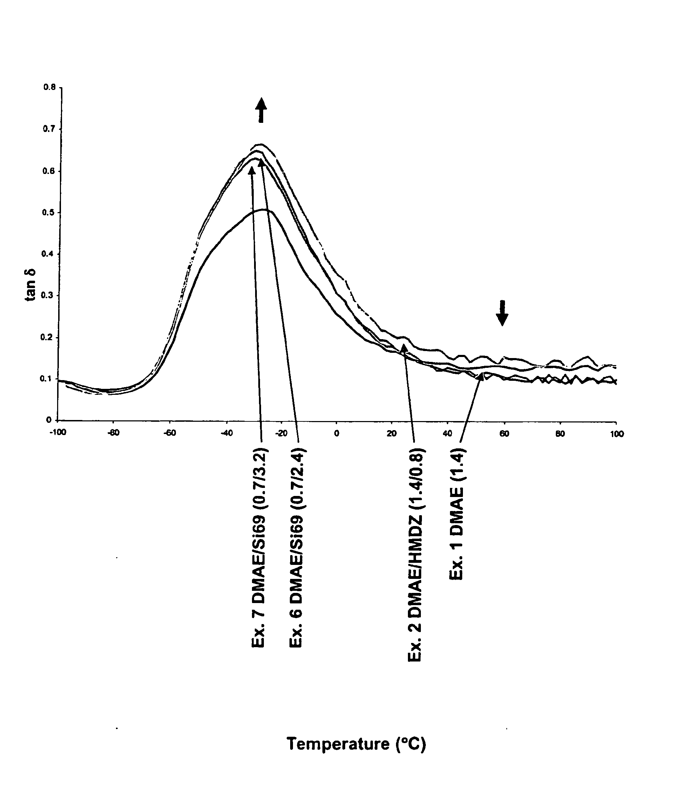

Analysis of the physical data for Examples 3-5 (see Table 2) indicates that the degree of reinforcement increases with the amount of Si-69 matching reinforcement of the DMAE/HMDZ compound. One important effect of this is that the compound hardness remains high relative to the control compound Example 2. Furthermore, the abrasion resistance appears to be improved as indicated by the DIN abrasion values for all compounds. Also, most importantly, the tan delta values at -20 and 0°C (indicative of improved traction properties) are maintained in example 5 while significantly reducing the predicted rolling resistance by 50%. This effect is more pronounced in such a blend compound than either Si-69 or DMAE alone. Furthermore, if increased levels of DMAE are used in an effort to improve filler interaction, the resulting compound appears scorched and significant processing difficulties arise. The DMAE/Si-69 mixed modifier system increases the abrasion values relative to DMAE (/HMDZ) or Si-69 containing compounds with no such processing penalty (see Figure 1).
Although it may be speculated that increased modifier may be the root cause of such effects, here it is not the case. If one examines Example 6 it is clear that by using less than the molar equivalent of modifiers used in Example 2, that much improved dynamic as well as physical properties are observed (see Figure 2, Table 2).
The above experimental data shows that a compound of the present invention comprising both a silane modifier and an additive derived from a compound comprising at least one hydroxyl group and a functional group containing a basic amine exhibits improved traction and reduced rolling resistance as compared with prior art compounds.

## Claims

1. A halobutyl elastomer compound consisting essentially of a halobutyl elastomer, at least one additional elastomer, a mineral filler, and a mixed modifier comprising a silane compound and an additive derived from a compound comprising at least one hydroxyl group and a functional group containing a basic amine.

2. A halobutyl elastomer compound according to Claim 1, wherein the halobutyl elastomer is selected from a chlorobutyl elastomer or a bromobutyl elastomer.

3. A halobutyl elastomer compound according to Claim 1, wherein the additional elastomer is selected from the group consisting of BR, SBR, NR or mixtures thereof.

4. A halobutyl elastomer compound according to Claim 1, wherein the filler is silica.

5. A halobutyl elastomer compound according to Claim 1, wherein the silane compound is an aminosilane or a sulfur-containing silane.

6. A halobutyl elastomer compound according to Claim 1, wherein the silane compound is selected from the group consisting of bis[3-(trimethoxysilyl)propyl]-tetrasulfane, -octanoylthio-1-propyltriethoxysilane (SilaneTM NXT) , bis[3-(triethoxysilyl)propyl]disulfane, bis[2-(trimethoxysilyl)ethyl]tetrasulfane, bis[2-(triethoxysilyl)ethyl]trisulfane, bis[3-(trimethoxysilyl)propyl]disulfane, 3-mercaptopropyltrimethoxysilane, 3-mercaptopropylmethyldiethoxysilane, 3-mercaptoethylpropylethoxymethoxysilane, bis[3-(triethoxysilyl)propyl]-tetrasulfane, bis[3-(trimethoxy-silyl)-propyl]monosulfane, bis[3-(triethoxysilyl)-propyl]trisulfane], bis[2-(triethoxysilyl)ethyl]tetrasulfane, and mixtures thereof.

7. A halobutyl elastomer compound according to Claim 1, wherein the additive is of the formula:
HO-B-NR₁₄R₁₅
wherein B is a linear or branched C₁-C₂₀ alkylene group, R₁₄ is H, C₁-C₁₁ alkyl or C₁-C₁₁ aryl; R₁₅ is H, C₁-C₁₁ alkyl or C₁-C₁₁ aryl.

8. A halobutyl elastomer compound according to Claim 1, wherein the additive is selected from the group consisting of monoethanol-amine, N, N-dimethylaminoethanol, and mixtures thereof.

9. A process for preparing a halobutyl elastomer compound comprising admixing a halobutyl elastomer, at least one additional elastomer, a filler and a mixed modifier comprising a silane compound and an additive derived from a compound comprising at least one hydroxyl group and a functional group containing a basic amine.

## Patentansprüche

1. Halobutylelastomercompound, im wesentlichen bestehend aus einem Halobutylelastomer, mindestens einem zusätzlichen Elastomer, einem mineralischen Füllstoff und einem gemischten Modifizierungsmittel, das eine Silanverbindung und ein von einer Verbindung mit mindestens einer Hydroxylgruppe und einer ein basisches Amin enthaltenden funktionellen Gruppe abgeleitetes Additiv enthält.

2. Halobutylelastomercompound nach Anspruch 1, bei dem das Halobutylelastomer unter einem Chlorbutylelastomer oder einem Brombutylelastomer ausgewählt ist.

3. Halobutylelastomercompound nach Anspruch 1, bei dem das zusätzliche Elastomer aus der Gruppe bestehend aus BR, SBR, NR oder Mischungen davon ausgewählt ist.

4. Halobutylelastomercompound nach Anspruch 1, bei dem es sich bei dem Füllstoff um Kieselsäure handelt.

5. Halobutylelastomercompound nach Anspruch 1, bei dem es sich bei der Silanverbindung um ein Aminosilan oder ein schwefelhaltiges Silan handelt.

6. Halobutylelastomercompound nach Anspruch 1, bei dem die Silanverbindung aus der Gruppe bestehend aus Bis[3-(trimethoxysilyl)propyl]tetrasulfan, 3-Octanoylthio-1-propyltriethoxysilan (SilaneTM NXT), Bis[3-(triethoxysilyl)propyl]disulfan, Bis-[2-(trimethoxysilyl)ethyl]tetrasulfan, Bis[2-(tri-ethoxysilyl)ethyl]trisulfan, Bis[3-(trimethoxysilyl)propyl]disulfan, 3-Mercaptopropyltrimethoxysilan, 3-Mercaptopropylmethyldiethoxysilan, 3-Mercaptoethylpropylethoxymethoxysilan, Bis[3-(tri-ethoxysilyl)propyl]tetrasulfan, Bis[3-(trimethoxysilyl)propyl]monosulfan, Bis[3-(triethoxysilyl)-propyl]trisulfan, Bis[2-(triethoxysilyl)ethyl]-tetrasulfan und Mischungen davon ausgewählt ist.

7. Halobutylelastomercompound nach Anspruch 1, bei dem das Additiv die Formel:
HO-B-NR₁₄R₁₅
worin B für eine lineare oder verzweigte C₁-C₂₀-Alkylengruppe steht, R₁₄ für H, C₁-C₁₁-Alkyl oder C₁-C₁₁-Aryl steht und R₁₅ für H, C₁-C₁₁-Alkyl oder C₁-C₁₁-Aryl steht, aufweist.

8. Halobutylelastomercompound nach Anspruch 1, bei dem das Additiv aus der Gruppe bestehend aus Monoethanolamin, N,N-Dimethylaminoethanol und Mischungen davon ausgewählt ist.

9. Verfahren zur Herstellung eines Halobutylelastomercompounds, bei dem man ein Halobutylelastomer, mindestens ein zusätzliches Elastomer, einen Füllstoff und ein gemischtes Modifizierungsmittel, das eine Silanverbindung und ein von einer Verbindung mit mindestens einer Hydroxylgruppe und einer ein basisches Amin enthaltenden funktionellen Gruppe abgeleitetes Additiv enthält, vermischt.

## Revendications

1. Composé élastomère halogénobutyle constitué essentiellement d'un élastomère halogénobutyle, d'au moins un élastomère supplémentaire, d'une charge minérale et d'un agent modificateur mixte comprenant un composé silane et un additif dérivé d'un composé renfermant au moins un groupe hydroxyle et un groupe fonctionnel renfermant une amine basique.

2. Composé élastomère halogénobutyle selon la revendication 1, dans lequel l'élastomère halogénobutyle est choisi parmi un élastomère chlorobutyle ou un élastomère bromobutyle.

3. Composé élastomère halogénobutyle selon la revendication 1, dans lequel l'élastomère supplémentaire est choisi parmi le groupe constitué d'un BR, d'un SBR, d'un NR ou de leurs mélanges.

4. Composé élastomère halogénobutyle selon la revendication 1, dans lequel la charge est la silice.

5. Composé élastomère halogénobutyle selon la revendication 1, dans lequel le composé silane est un aminosilane ou un silane soufré.

6. Composé élastomère halogénobutyle selon la revendication 1, dans lequel le composé silane est choisi parmi le groupe constitué du bis[3-(triméthoxysilyl)propyl]-tétrasulfane, de l'octanoylthio-1-propyltriéthoxysilane (SilaneTM NXT), du bis[3-(triéthoxysilyl)propyl]disulfane, du bis[2-(triméthoxysilyl)éthyl]tétrasulfane, du bis[2-(triéthoxysilyl)éthyl]trisulfane, du bis[3-(triméthoxysilyl)propyl]disulfane, du 3-mercaptopropyltriméthoxysilane, du 3-mercaptopropylméthyldiéthoxysilane, du 3-mercaptoéthylpropyléthoxyméthoxysilane, du bis[3-(triéthoxysilyl)propyl]tétrasulfane, du bis[3-(triméthoxysilyl)propyl]monosulfane, du bis[3-(triéthoxysilyl)propyl]trisulfane, du bis[2-(triéthoxysilyl)éthyl]tétrasulfane, et de leurs mélanges.

7. Composé élastomère halogénobutyle selon la revendication 1, dans lequel l'additif est de formule :
HO-B-NR₁₄R₁₅
dans laquelle B est un groupe alkylène en C₁-C₂₀ linéaire ou ramifié ; R₁₄ est un atome d'hydrogène, un groupe alkyle en C₁-C₁₁ ou un groupe aryle en C₁-C₁₁ ; R₁₅ est un atome d'hydrogène, un groupe alkyle en C₁-C₁₁ ou un groupe aryle en C₁-C₁₁.

8. Composé élastomère halogénobutyle selon la revendication 1, dans lequel l'additif est choisi parmi le groupe constitué de la monoéthanolamine, du N,N-diméthylaminoéthanol, et de leurs mélanges.

9. Procédé de préparation d'un composé élastomère halogénobutyle, comprenant le mélangeage d'un élastomère halogénobutyle, d'au moins un élastomère supplémentaire, d'une charge et d'un agent modificateur mixte comprenant un composé silane et un additif dérivé d'un composé renfermant au moins un groupe hydroxyle et un groupe fonctionnel renfermant une amine basique.
